# EUROPÄISCHE PATENTSCHRIFT

(11) **EP 2 222 977 B1**
(45) Veröffentlichungstag und Bekanntmachung des Hinweises auf die Patenterteilung: **13.04.2011**
(21) Anmeldenummer: 08852624.9
(22) Anmeldetag: 14.11.2008
(51) Int. Cl.: F16D 65/21, F16D 65/56

(54) **ELEKTROMECHANISCHE REIBUNGSBREMSE**
ELECTROMECHANICAL FRICTION BRAKE
FREIN À FRICTION ÉLECTROMÉCANIQUE

(30) Priorität: 21.11.2007 DE 102007055637
(43) Veröffentlichungstag der Anmeldung: 01.09.2010
(73) Patentinhaber: Robert Bosch GmbH, 70442 Stuttgart (DE)
(72) Erfinder: VOLLERT, Herbert, 71665 Vaihingen/Enz (DE); CAO, Chi-Thuan, 70825 Korntal-Muenchingen (DE); FOITZIK, Bertram, 74360 Ilsfeld (DE); NAGEL, Willi, 71686 Remseck/Hochdorf (DE); GOETZELMANN, Bernd, 71063 Sindelfingen (DE); HOFMANN, Dirk, 794 01 Krnov-pod Cvilinem (CZ)
(86) Internationale Anmeldenummer: PCT/EP2008/065589
(87) Internationale Veröffentlichungsnummer: WO 2009/065781

(56) Entgegenhaltungen:
- WO-A-97/19275
- DE-A1- 19 621 533
- DE-A1-102006 012 440

## Beschreibung

### Stand der Technik

Die Erfindung betrifft eine elektromechanische Reibungsbremse mit den Merkmalen des Oberbegriffs des Anspruchs 1. Die Reibungsbremse ist insbesondere als Radbremse für ein Kraftfahrzeug vorgesehen. Elektromechanisch bedeutet, sie weist eine elektromechanische Betätigungseinrichtung beispielsweise mit einem Elektromotor und einem Getriebe zur ihrer Betätigung, d. h. zum Andrücken eines Reibbremsbelags an einen zu bremsenden Bremskörper auf. Die Betätigung einer Bremse wird auch als Zuspannen bezeichnet. Im Falle einer Scheibenbremse ist der Bremskörper eine Bremsscheibe, im Falle einer Trommelbremse ist der Bremskörper eine Bremstrommel. Die Erfindung ist nicht auf die genannten Baumformen Scheiben- oder Trommelbremse beschränkt sondern grundsätzlich in beliebigen Bremsenbauformen verwirklichbar. Auch wenn die Erfindung nachfolgend anhand einer Scheibenbremse erläutert wird ist sie nicht auf diesem Bremsentyp beschränkt.

Aus der DE 196 81 658 T1 (Familienmitglied WO-A-97/19275) ist eine derartige Reibungsbremse als Radbremse für ein Kraftfahrzeug bekannt. Die bekannte Reibungsbremse ist als Scheibenbremse ausgeführt. Als Betätigungseinrichtung weist sie wahlweise einen Elektromagneten oder einen Linearmotor auf, mit dem ein Reibbremsbelag gegen eine Bremsscheibe drückbar ist, die einen zu bremsenden Bremskörper bildet. Unterstützt wird die Betätigungseinrichtung von einer Tellerfeder, die den Reibbremsbelag ebenfalls im Sinne eines Drückens gegen den Bremskörper, also im Sinne einer Betätigung der Bremse beaufschlagt. Dadurch muss die Betätigungseinrichtung nur einen Teil der Spannkraft zum Drücken des Reibbremsbelags gegen den Bremskörper aufbringen, der übrige Teil der Spannkraft ist eine von der Tellerfeder ausgeübte Federkraft. Es genügt eine kleinere, leichtere und leistungsschwächere elektromechanische Betätigungseinrichtung.

Die bekannte Reibungsbremse hat keine normale Tellerfeder sondern eine spezeille Tellerfeder, die keine lineare Federkennlinie hat, sondern deren Federkennlinie zunächst steigt und nach einem Maximum wieder fällt. Nach einem Minimum, das üblicherweise nahe einer Federkraft von Null liegt und positiv oder negativ sein kann, steigt die Federkennlinie der speziellen Tellerfeder üblicherweise noch einmal. Ist das Minimum der Federkennlinie negativ bedeutet das eine negative Federkraft, d. h. die Richtung der Federkraft kehrt sich um. Besonderheit der speziellen Tellerfeder ist also, dass ihre Federkennlinie einen fallenden Abschnitt aufweist. Umgekehrt als bei Federn mit linearer Federkennlinie nimmt die Federkraft in dem Abschnitt, in dem die Federkennlinie fällt, mit zunehmender Verformung der Tellerfeder ab. Andersherum ausgedrückt steigt die Federkraft der Tellerfeder mit abnehmender Verformung in dem Bereich, in dem ihre Federkennlinie fällt. Die Verformung, die auch als Auslenkung bezeichnet werden kann, bedeutet eine Abflachung der Tellerfeder, die in unbelastetem Zustand kegelförmig oder gewölbt ist. Die Verformung kann bis zu einer ebenen Scheibe oder darüber hinweg erfolgen. Letzteres bedeutet, dass die Tellerfeder sozusagen umgestülpt wird, ihre Wölbung sich also umkehrt.

Die bekannte Reibungsbremse nutzt die Besonderheit, dass die verwendete, spezielle Tellerfeder eine Federkennlinie mit einem fallenden Abschnitt aufweist. Die Tellerfeder wird im Bereich ihrer fallenden Federkennlinie eingesetzt, sie ist bei gelöster Reibungsbremse so weit verformt, dass sie sich im Bereich des Minimums ihrer Federkennlinie befindet. Beim Betätigen oder Zuspannen der Reibungsbremse verringert sich die Verformung der Tellerfeder, wobei die Federkraft aufgrund der fallenden und in negativer Richtung durchlaufenen Federkennlinie steigt. Mit zunehmender Zuspannung der Reibungsbremse nimmt also die von der Tellerfeder auf den Reibbremsbelag ausgeübte Federkraft zu, wodurch sich ein großer Teil der Spannkraft von der Tellerfeder aufbringen lässt. Der von der Betätigungseinrichtung aufzubringende Teil der Spannkraft ist dadurch über den gesamten Betätigungs- und Spannkraftbereich klein.

Die Erfindung ist nicht speziell auf eine Tellerfeder beschränkt, sondern es kann allgemein ein Federelement Verwendung finden, dessen Federkennlinie zumindest auf einen Abschnitt fällt. Das Federelement wirkt parallel zur Betätigungseinrichtung, d. h. die Kraft der Betätigungseinrichtung und des Federelements addieren sich.

### Offenbarung der Erfindung

Wie die bekannte Reibungsbremse weist auch die erfindungsgemäße Reibungsbremse ein Federelement mit abschnittsweise fallender Federkennlinie auf, das parallel zu einer Betätigungseinrichtung der Reibungsbremse wirkt, also den Reibbremsbelag im Sinne einer Bremsbetätigung beaufschlagt. Aufgrund der fallenden Federkennlinie nimmt eine vom Federelement auf den Reibbremsbelag ausgeübte Federkraft mit zunehmender Zuspannung der Reibungsbremse zu. Ein Elektromotor und Getriebe werden entsprechend entlastet.

Die erfindungsgemäße Reibungsbremse ist elektromechanisch, sie weist eine elektromechanische Betätigungseinrichtung mit einem Elektromotor auf. Sie kann ein Getriebe, insbesondere ein Untersetzungsgetriebe aufweisen. Zur Umsetzung einer rotierenden Antriebsbewegung des Elektromotors in eine translatorische Bewegung zum Drücken des Reibbremsbelags gegen den Bremskörper weist die erfindungsgemäße Reibungsbremse einen Rampenmechanismus auf. Es sind Kugelrampenmechanismen bekannt mit zwei gleichachsig angeordneten Scheiben, zwischen denen - wegen der statischen Bestimmtheit üblicherweise drei - Kugeln in Umfangsrichtung verteilt angeordnet sind. Eine der beiden Scheiben ist drehend antreibbar. Auf oder in einander zugewandten Stirnflächen weisen die Scheiben in Umfangsrichtung verlaufende Rampen auf, die in einer Umfangsrichtung steigen und in denen die Kugeln wälzen. Die Rampen sind üblicherweise rinnenförmige Vertiefungen, die in einer Umfangsrichtung niedriger werden.

Durch Drehen der einen Scheibe wälzen die Kugeln in steigender Richtung der Rampen und drücken die Scheiben auseinander, wodurch die translatorische Bewegung erzeugt wird. Bei umgekehrter Drehrichtung nähern sich die beiden Scheiben. Anstelle von Kugeln können auch andere Wälzkörper Verwendung finden, beispielsweise Zylinder- oder Kegelrollen. Diese können an einer Scheibe drehbar gelagert sein, so dass nur die andere Scheibe Rampen aufweist, auf denen die Rollen oder sonstigen Wälzkörper wälzen. Auch ist ein Rampenmechanismus ohne Wälzkörper denkbar, der eine oder mehrere in Umfangsrichtung verlaufende Rampen aufweist, die durch Drehung einen Gegenkörper abdrücken und dadurch eine translatorische Bewegung wie beim bekannten Kugelrampenmechanismus erzeugen.

Der Rampenmechanismus der erfindungsgemäßen Reibungsbremse weist vorzugsweise, allerdings nicht zwingend, Wälzkörper beispielsweise Kugeln oder Rollen als Wälzkörper auf und bildet einen Wälz-, Kugel- oder Rollenrampenmechanismus. Der Rampenmechanismus hat, jedenfalls wenn er Wälzkörper aufweist, den Vorteil einer niedrigen Reibung. Weiterer Vorteil des Rampenmechanismus ist, dass sich die Steigung der Rampen über ihre Länge ändern kann. Durch eine zunächst große Steigung lässt sich ein Lüftspiel, also ein Spalt zwischen dem Reibbremsbelag und dem Bremskörper bei gelöster Reibungsbremse, schnell überwinden. Durch eine abnehmende Steigung wird mit zunehmender Zuspannung der Reibungsbremse eine größere Kraftübersetzung und damit bei begrenztem Antriebsmoment eine große Kraft erzielt. Ein weiterer Vorteil eines Rampenmechanismus ist die Möglichkeit einer Feststell- oder Parkbremse durch eine Vertiefung in den Rampen des Rampenmechanismus nach einem Anstieg. Gelangen die Kugeln oder Wälzkörper in die Vertiefung verbleibt der Rampenmechanismus von selbst in dieser Drehstellung und hält die Reibungsbremse bei stromlosem Elektromotor zugespannt.

Anspruch 8 hat eine Verschleißnachstellung zum Gegenstand. Dazu weist der Rampenmechanismus eine Drehwinkelbegrenzung in einer Drehrichtung auf, die der Löserichtung der Reibungsbremse entspricht. Die Drehwinkelbegrenzung kann durch einen Anschlag an einem Ende der Rampen gebildet sein. Der Rampenmechanismus lässt sich dadurch nicht weiter als bis zum Lösen der Reibungsbremse zurückdrehen. Des Weiteren weist die Reibungsbremse eine Kupplung auf, die in einer Betätigungsdrehrichtung ein zum Zuspannen der Reibungsbremse bis zur maximalen Spannkraft ausreichendes Drehmoment überträgt. In der entgegengesetzten Rück- oder Lösedrehrichtung ist das von der Kupplung übertragene Drehmoment begrenzt. Beispiele einer derartigen Kupplung sind eine Rutschkupplung oder eine richtungsgeschaltete Kupplung, also ein sog. Freilauf. Das Federelement der Reibungsbremse kann Bestandteil der Rutschkupplung sein. Außerdem weist die Reibungsbremse zur Verschleißnachstellung ein Schraubgetriebe auf, das bei einer Verdrehung des Kupplungsein- gegenüber dem Kupplungsausgang im Sinne einer Zustellung des Reibbremsbelags zum Bremskörper verstellt wird. Die Verschleißnachstellung erfolgt dadurch, dass der Rampenmechanismus bei gelöster Reibungsbremse mit einem Drehmoment in Löserichtung beaufschlagt wird. Wegen der Drehwinkelbegrenzung verdrehen sich nicht der Ein- und Ausgang des Rampenmechanismus gegeneinander, sondern der Kupplungsein- und -ausgang. Dadurch wird das Schraubgetriebe verstellt, es erfolgt eine Zustellung des Reibbelags zum Bremskörper, der Abstand des Reibbremsbelags vom Bremskörper, also das Lüftspiel wird verkleinert.

Verringert sich eine Dicke des Reibbremsbelags durch Verschleiß, verkleinert sich damit ein Federweg aufgrund der Elastizität des Reibbremsbelags. Zum Ausgleich sieht Anspruch 9 eine Federelastizität des Schraubgetriebes vor. Wird das Schraubgetriebe zum Verschleißausgleich im Sinne einer Zustellung des Reibbremsbelags zum Bremskörper verstellt, vergrößert sich eine Länge des Schraubgetriebes und damit seine Federlänge bzw. seine Federelastizität nimmt zu. Der verkürzte Federweg durch den Verschleiß des Reibbremsbelags wird dadurch kompensiert, wobei die Kompensation vollständig oder teilweise oder auch Überkompensation stattfinden kann.

Anspruch 10 sieht ein zweites Federelement mit (abschnittsweise) fallender Federkennlinie vor, das dem nachfolgend auch als erstes bezeichneten Federelement entgegenwirkt. Als zweites Federelement kann wiederum grundsätzlich jedes Federelement mit zumindest abschnittsweise fallender Federkennlinie Verwendung finden, insbesondere ebenfalls eine spezielle Tellerfeder. Das erste Federelement beaufschlagt den Reibbremsbelag unmittelbar oder mittelbar im Sinne einer Betätigung der Reibungsbremse, es ist bei gelöster Reibungsbremse mehr vorgespannt als bei betätigter Reibungsbremse. Aufgrund der fallenden Federkennlinie steigt die Federkraft des ersten Federelements bei Betätigung der Reibungsbremse. Das zweite Federelement wirkt dem ersten Federelement entgegen, also im Sinne eines Lösens der Reibungsbremse. Das zweite Federelement ist bei gelöster Reibungsbremse weniger weit vorgespannt als bei betätigter Reibungsbremse, aufgrund der fallenden Federkennlinie nimmt die Federkraft des zweiten Federelements bei Betätigung der Reibungsbremse ab. Die beiden Federelemente sind so ausgelegt und insgesamt ist die Anordnung der beiden Federelemente so gestaltet, dass bei gelöster Reibungsbremse die resultierende Federkraft beider Federelemente nahezu Null ist; eine niedrige, negative, d. h. im Sinne eines Lösens der Reibungsbremse wirkende resultierende Federkraft beider Federelemente hält die gelöste Reibungsbremse von selbst, also ohne Einwirkung ihrer Betätigungseinrichtung, in der gelösten Stellung und wird deswegen bevorzugt. Bei betätigter Reibungsbremse ist die resultierende Federkraft beider Federelemente positiv, d. h. die Betätigung der Reibungsbremse wird von den beiden Federelementen unterstützt. Je nach Auslegung der beiden Federelemente und konstruktiver Gestaltung der Reibungsbremse kann die resultierende Federkraft in etwa konstant sein oder steigen. Durch eine mit zunehmender Zuspannung steigende resultierende Federkraft wird auch bei hoher Spannkraft ein großer Teil der Spannkraft von den beiden Federelementen aufgebracht. Grundsätzlich ist auch eine fallende Federkraft möglich, was allerdings nicht zweckmäßig sein dürfte. Durch die erfindungsgemäße Kombination zweier Federelemente mit fallender Federkennlinie lässt sich die resultierende Federkennlinie der beiden Federelemente und die resultierende, auf den Reibbremsbelag wirkende Federkraft beeinflussen. Außerdem ist eine bei gelöster Reibungsbremse negative, d. h. im Sinne eines Lösens der Reibungsbremse wirkende resultierende Federkraft möglich, die eine Vorspannung auf bewegliche Teile der Reibungsbremse ausübt und ein Klappern bei gelöster Reibungsbremse vermeidet. Federelement mit fallender Federkennlinie ist als Federelement mit zumindest abschnittsweise fallender Federkennliie zu verstehen, das im Abschnitt seiner fallenden Federkennlinie eingesetzt ist.

Um einen Federweg des Federelements mit der fallenden Federkennlinie zu über- oder untersetzen sieht eine Ausgestaltung der Erfindung ein Getriebe vor, über dass das Federelement mit der fallenden Federkennlinie am Reibbremsbelag angreift. In einer Weiterbildung gemäß Anspruch 13 weist das Getriebe eine sich ändernde Übersetzung auf. Beispiele derartiger Getriebe sind Hebel-, insbesondere Kniehebelgetriebe oder ein Rampenmechanismus.

### Kurze Beschreibung der Zeichnungen

Weitere Merkmale der Erfindung ergeben sich aus der folgenden Beschreibung von Ausführungsformen der Erfindung in Verbindung mit den Ansprüchen und der Zeichnung. Die einzelnen Merkmale können je für sich oder zu mehreren bei Ausführungsformen der Erfindung verwirklicht sein, es müssen nicht zwingend alle Merkmale eines Anspruchs bei einer Ausführungsform der Erfindung verwirklicht sein. Es zeigen:
- Figur 1: ein erstes Ausführungsbeispiel einer erfindungsgemäßen Rei- bungsbremse in Bauform einer Scheibenbremse mit Blickrichtung radial von außen auf eine Bremsscheibe geschnitten in einer Se- kantenebene zur Bremsscheibe;
- Figur 2: eine Steigung einer Rampe eines Rampenmechanismus der Rei- bungsbremse aus Figur 1;
- Figur 3: eine Federkennlinie eines Federelements der Reibungsbremse aus Figur 1; und
- Figur 4: eine Einzelheitdarstellung gemäß Pfeil IV in Figur 1 einer abgewan- delten Ausführungsform der Erfindung.

Die Figuren sind als vereinfachte, schematisierte und nicht maßstäbliche Darstellungen zum Verständnis und zur Erläuterung der Erfindung zu verstehen.

### Ausführungsformen der Erfindung

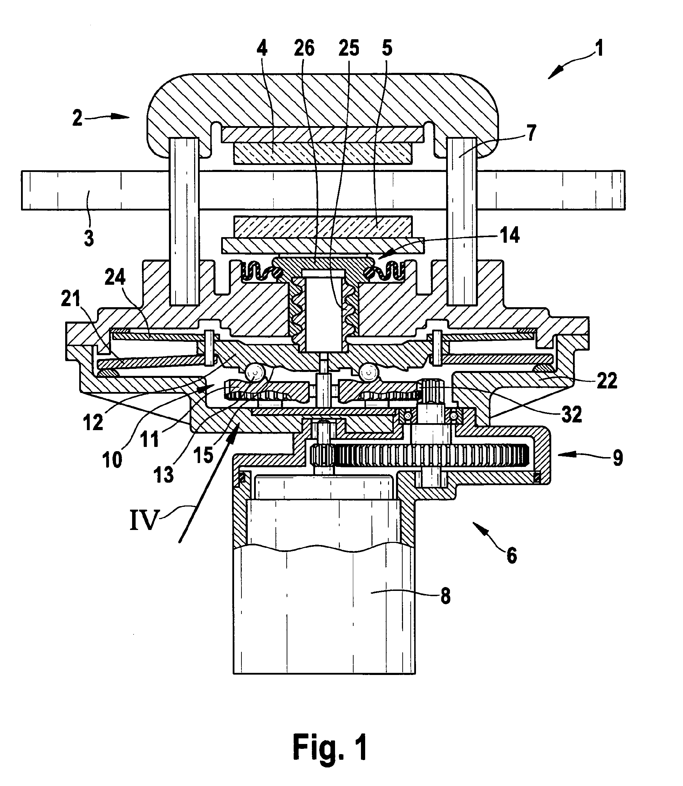

Die in Figur 1 dargestellte Reibungsbremse gemäß der Erfindung ist als Scheibenbremse 1 ausgebildet. Sie weist einen Bremssattel 2 auf, in dem beiderseits einer Bremsscheibe 3 zwei Reibbremsbeläge 4, 5 angeordnet sind. Einer der beiden Reibbremsbeläge 4 ist fest im Bremssattel 2 angeordnet, der andere Reibbremsbelag 5 ist zur Betätigung, d. h. zum Zuspannen der Scheibenbremse 1 mit einer elektromechanischen Betätigungseinrichtung 6 gegen die Bremsscheibe 3 drückbar. Die Betätigungseinrichtung 6 ist auf der gleichen Seite der Bremsscheibe 3 wie der bewegliche Reibbremsbelag 5 angeordnet. Beide Reibbremsbeläge 4, 5 stützen sich in Umfangsrichtung der Bremsscheibe 3 in an sich bekannter Weise in einem Bremsenhalter ab, der hier der klaren Darstellung wegen nicht gezeichnet ist. Der Bremsenhalter führt in an sich bekannter Weise den Bremssattel 2 an Führungsbolzen 7 quer zur Bremsscheibe 3 verschieblich. Beim Andrücken des beweglichen Reibbremsbelags 5 gegen die Bremsscheibe 3 wird der Bremssattel 2 quer zur Bremsscheibe 3 verschoben und drückt den Bremssattel 2 quer zur Bremsscheibe 3 verschoben und drückt den festen Reibbremsbelag 4 gegen die andere Seite der Bremsscheibe 3, die dadurch gebremst wird. Dies ist an sich bekannt. Die Bremsscheibe 3 bildet einen zu bremsenden Bremskörper.

Die Betätigungseinrichtung 6 weist einen Elektromotor 8 auf, der über ein Untersetzungsgetriebe 9 und einen noch zu erläuternden Rampenmechanismus 10 den beweglichen Reibbremsbelag 5 gegen die Bremsscheibe 3 drückt. Im dargestellten Ausführungsbeispiel ist das Untersetzungsgetriebe 9 ein zweistufiges Zahnradgetriebe mit Stirnrädern.

Der Rampenmechanismus 10 weist zwei gleichachsig angeordnete, im Wesentlichen kreisförmige Scheiben 11, 12 auf, die gegeneinander verdrehbar sind. Die eine Scheibe 11 weist eine Verzahnung 32 an ihrem Außenumfang auf, sie bildet somit zugleich ein Stirnrand und das letzte Zahnrad des Zahnradgetriebes 9. Anstatt einer Stirnverzahnung kann die Scheibe 11 auch als Teller- oder als Kegelrad ausgebildet sein (nicht dargestellt), so dass die letzte Stufe des Untersetzungsgetriebes 9 ein Winkelgetriebe bildet (nicht dargestellt). Dadurch ist eine Anordnung des Elektromotors 8 anstatt wie im Ausführungsbeispiel dargestellt mit zur Bremsscheibe 3 senkrechter Achse parallel zur Bremsscheibe 3 möglich. Das ermöglicht eine kompaktere Bauform des Bremssattels 2. Auch mittels eines Schneckengetriebes, dessen Schnecke in die Verzahnung 32 am Umfang der Scheibe 11 des Rampenmechanismus 10 eingreift, ist eine Anordnung des Elektromotors 8 parallel zur Bremsscheibe 3 möglich (nicht dargestellt).

Die Scheibe 11 wird nachfolgend auch als Antriebsscheibe oder kurz als Antrieb des Kugelrampenmechanismus 10 bezeichnet werden und erhält stets die gleiche Bezugszahl 11. Die andere Scheibe 12 des Rampenmechanismus 10 wird nachfolgend auch als Abtriebsscheibe oder Abtrieb des Kugelrampenmechanismus 10 bezeichnet werden und erhält stets die Bezugszahl 12. Beide Scheiben 11, 12 weisen auf ihren einander zugewandten Stirnflächen Rinnen auf, die sich über einen begrenzten Winkel in Umfangsrichtung erstrecken. Die Rinnen bilden Kugelbahnen oder Rampen 15, in denen Kugeln 13 als Wälzkörper wälzen. Der Rampenmechanismus 10 ist somit ein -Kugelrampenmechanismus. Anstelle von Kugeln 13 kann der Rampenmechanismus auch andere Wälzkörper, beispielsweise Zylinder- oder Kegelrollen aufweisen oder er kann als Gleit- anstatt als Wälzmechanismus ausgebildet sein (nicht dargestellt). Eine Tiefe der die. Kugelbahnen bildenden Rinnen verringert sich in einer Umfangsrichtung der Scheiben 11, 12, d. h. die Kugelbahnen weisen eine Steigung in einer Umfangsrichtung der Scheiben 11, 12 auf. Es sind drei Kugelbahnen über den Umfang verteilt vorgesehen, so dass sich die Scheiben 11, 12 mit drei Kugeln 13 und damit statisch bestimmt aneinander abstützen. Durch eine Drehung der Antriebsscheibe 11 gegenüber der Abtriebsscheibe 12 wälzen die Kugeln 13 in den Kugelbahnen und drücken aufgrund der Steigung der Kugelbahnen die Scheiben 11, 12 auseinander. Durch Drehung der Antriebsscheibe 11 wird die Abtriebsscheibe 12 translatorisch in axialer Richtung verschoben. Über ein noch zu erläuterndes Schraubgetriebe 14 drückt die Abtriebsscheibe 12 des Rampenmechanismus 10 den beweglichen Reibbremsbelag 5 gegen die Bremsscheibe 3.

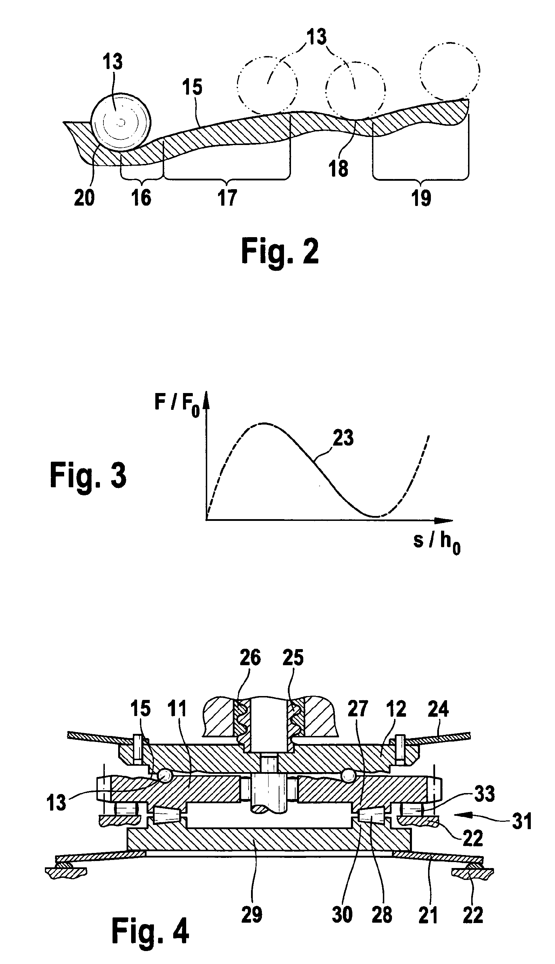

Die Steigung der Kugelbahnen, die nachfolgend auch als Rampen 15 bezeichnet werden, in den Scheiben 11, 12 des Rampenmechanismus 10 ist nicht konstant, sondern weist den in Figur 2 dargestellten Verlauf auf. Zu Beginn weisen die Rampen 15 auf einem kurzen Abschnitt 16 eine große Steigung auf, so dass ein Lüftspiel, also ein Spalt zwischen den Reibbremsbelägen 4, 5 und der Bremsscheibe 3 schnell überwunden wird. Anschließend weisen die Kugelbahnen 15 einen Abschnitt 17 mit kleiner werdender Steigung auf. In diesem Abschnitt 17 liegen die Reibbremsbeläge 4, 5 an der Bremsscheibe 3 an und die Spann- und Bremskraft wird durch Verdrehung der Antriebsscheibe 11 in einer Zuspannrichtung erhöht. Die kleiner werdende Steigung im Abschnitt 17 der Rampen 15 bewirkt eine Erhöhung der Kraftübersetzung, so dass sich eine hohe Spann- und Bremskraft erreichen lässt. Die Spannkraft ist die Kraft, mit der der bewegliche Reibbremsbelag 5 gegen die Bremsscheibe 3 gedrückt wird.

Nach dem Abschnitt 17 mit der kleiner werdenden Steigung weisen die Rampen 15 eine Vertiefung 18 auf. Wird die Scheibenbremse 1 so stark zugespannt, dass die Kugeln 13 in die Vertiefungen 18 der Rampen 15 gelangen, verbleibt der Rampenmechanismus 10 selbsttätig in dieser Stellung, die Scheibenbremse 1 bleibt ohne Hilfe des Elektromotors 8 zugespannt. Es ist die sog. Feststell- oder Parkbremsstellung der Scheibenbremse 1, in der die Scheibenbremse 1 die Bremskraft unbestromt aufrecht erhält.

Auf einem sich an die Vertiefung 18 anschließenden Abschnitt 19 steigen die Rampen 15 wieder an. Die Spann- und Bremskraft lässt sich dadurch weiter erhöhen. Dieser Abschnitt 19 ist für Radbremsen einer Hinterachse eines Kraftwagens vorgesehen um die Bremskraft bei Rückwärtsfahrt weiter erhöhen zu können. Grund dafür ist, dass die Hinterachse mit einer Bremsung bei Rückwärtsfahrt zusätzlich belastet wird und dadurch eine höhere Bremskraft möglich und evtl. notwendig ist. Ansonsten können die Rampen 15 auch mit der Vertiefung 18 enden. Im Falle dass keine Feststell- und Parkbremsfunktion gewünscht ist, kann die Vertiefung 18 entfallen. Der Abschnitt 17, in dem die Steigung der Kugelbahnen 15 kleiner wird, wird für übliche Betriebsbremsungen genutzt.

In Löserichtung ist ein Drehwinkel der Scheiben 11, 12 des Rampenmechanismus 10 begrenzt. Die Drehwinkelbegrenzung erfolgt mittels eines Anschlags 20, der durch eine Tiefe und Form der die Rampen 15 bildenden Rinnen am Beginn der Rampen 15 in den Scheiben 11, 12 gebildet ist. Der Anschlag, der den Drehwinkel der Scheiben 11, 12 in Löserichtung begrenzt, kann auch in anderer Weise verwirklicht sein, beispielsweise können beide Scheiben 11, 12 Nasen aufweisen, die beim Rückdrehen der Scheiben 11, 12 gegeneinander stoßen (nicht dargestellt). Die Scheiben 11, 12 lassen sich also in Rückdrehrichtung, d. h. in Löserichtung der Scheibenbremse 1, nur bis in ihre Ausgangsstellung zurück gegen einander Verdrehen.

Die Abtriebsplatte 12 des Rampenmechanismus 10 wird von einer Tellerfeder 21 in Richtung zur Bremsscheibe 3 beaufschlagt, also im Sinne eines Zuspannens der Scheibenbremse 1. Die Tellerfeder 21 stützt sich in einem Gehäuse 22 des Bremssattels 2 ab, in dem auch das Getriebe 9 und der Rampenmechanismus 10 untergebracht sind. Es ist eine spezielle Tellerfeder 21, die keine lineare Federkennlinie aufweist; ihre Federkennlinie 23 ist im Diagramm in Figur 3 dargestellt. Auf der Ordinate ist die relative Federkraft F/F₀ aufgetragen, auf der Abszisse die Verformung s der Tellerfeder bezogen auf ihre Höhe h₀ bei unverformter Tellerfeder 21. Die Federkennlinie steigt bis zu einem Maximum und fällt anschließend auf ein Minimum, von wo aus sie wieder ansteigt. Am Minimum der Federkennlinie beträgt die Federkraft näherungsweise Null. Am Minimum kann die Federkennlinie der Tellerfeder 21 einen niedrigen positiven oder negativen Wert aufweisen. Negativ bedeutet, dass die Federkraft in entgegengesetzter Richtung wirkt. Die Verformung s der Tellerfeder 21 bedeutet, dass diese zunehmend abgeflacht wird. Sie erreicht eine ebene Scheibenform auf dem fallenden Teil der Federkennlinie 23 etwas vor dem Minimum. Bei weiterer Verformung wird die Tellerfeder 21 sozusagen umgestülpt, sie wölbt sich in entgegengesetzter Richtung.

In der erfindungsgemäßen Scheibenbremse 1 ist die Tellerfeder 21 bei gelöster Scheibenbremse 1 so vorgespannt, dass sie sich etwa am Minimum der Federkennlinie 23 befindet. Beim Zuspannen der Scheibenbremse 1 nimmt die Verformung der Tellerfeder 21 ab, d. h. sie wölbt sich stärker in Richtung ihres entspannten Zustands. Bei maximaler Zuspannung der Scheibenbremse 1 verringert sich die Verformung der Tellerfeder 21 bis in den Bereich des Maximums der Federkennlinie 23. Die Tellerfeder 21 wird also in dem Abschnitt ihrer Kennlinie 23 verwendet, in dem die Kennlinie 23 fällt. Im Diagramm der Figur 3 ist der benutzte Abschnitt der Federkennlinie mit einer durchgezogenen Linie gezeichnet, auβerhalb des benutzten Abschnitts ist die Federkennlinie mit Strichlinien dargestellt. Beim Zuspannen wird die Federkennlinie vom Minimum zum Maximum, im Diagramm also von rechts nach links, durchlaufen. Die auch als Auslenkung zu bezeichnende Verformung verringert sich, was bedeutet, dass sich die bei gelöster Scheibenbremse 1 nahezu abgeflachte Tellerfeder 21 beim Zuspannen in Richtung ihrer entspannten Form wölbt. Das bedeutet auch, dass die von der Tellerfeder 21 auf den beweglichen Reibbremsbelag 5 ausgeübte Federkraft mit zunehmender Zuspannung der Scheibenbremse 1 steigt anstatt wie bei Federelementen mit steigender Federkennlinie abzunehmen. Mit zunehmender Zuspannung der Scheibenbremse 1 steigt somit der von der Tellerfeder 21 aufgebrachte Teil der Spannkraft, mit der der bewegliche Bremsbelag 5 gegen die Bremsscheibe 3 gedrückt wird. Die elektromechanische Betätigungseinrichtung 6 einschließlich des Untersetzungsgetriebes 9 und des Rampenmechanismus 10 sind entsprechend weniger belastet, der Elektromotor 8 braucht nur einen Teil der zur Bremsbetätigung notwendigen Spannkraft aufzubringen und kann entsprechend kleiner, leichter und leistungsschwächer dimensioniert werden. Auch das Untersetzungsgetriebe 9 kann für ein entsprechend geringeres Drehmoment ausgelegt werden. Allgemein kann die Tellerfeder 21, die erfindungsgemäß auf dem fallenden Abschnitt ihrer Federkennlinie 23 verwendet wird, als Federelement mit (abschnittsweise) fallender Federkennlinie aufgefasst werden.

Der nachfolgend als erste bezeichneten Tellerfeder 21 wirkt eine zweite Tellerfeder 24 entgegen, die auf der gegenüberliegenden Seite der Abtriebsplatte 12 des Rampenmechanismus 10 angreift und die sich ebenfalls im Gehäuse 22 des Bremssattels 2 abstützt. Auch die zweite Tellerfeder 24 ist eine spezielle Tellerfeder 24 mit einer Figur 3 entsprechenden Federkennlinie, die einen fallenden Abschnitt aufweist und die im fallenden Abschnitt ihrer Federkennlinie benutzt wird. Da die zweite Tellerfeder 24 umgekehrt angeordnet ist wie die erste Tellerfeder 21, wird die zweite Tellerfeder 24 bei einem Zuspannen der Scheibenbremse 1 stärker verformt, sie durchläuft die Federkennlinie vom Maximum zum Minimum, also von links nach rechts, wobei ihre Federkraft abnimmt. Während die Federkraft der ersten Tellerfeder 21 beim Zuspannen der Scheibenbremse 1 zunimmt, nimmt die entgegengerichtete Federkraft der zweiten Tellerfeder 24 beim Zuspannen der Scheibenbremse 1 ab. Bei gelöster Scheibenbremse 1 gleicht die zweite Tellerfeder 24 die Federkraft der ersten Tellerfeder 21 aus, die sich bei gelöster Scheibenbremse 1 im Bereich ihrer minimalen Federkraft befindet. Dadurch bleibt die Scheibenbremse 1 ohne Wirkung der Betätigungseinrichtung 6, also bei stromlosem Elektromotor 8, in der also bei stromlosem Elektromotor 8, in der gelösten Stellung. Bei gelöster Scheibenbremse 1 kann auch die Federkraft der zweiten Tellerfeder 24, die im Sinne eines Lösens der Scheibenbremse 1 wirkt, etwas größer sein als die Federkraft der ersten Tellerfeder 21, die im Sinne eines Zuspannens der Scheibenbremse 1 wirkt. Dadurch halten die beiden Tellerfedern 21, 24 die Scheibenbremse 1 mit geringer Vorspannung gelöst und vermeiden Klappergeräusche. Bei betätigter Scheibenbremse 1 ist die Federkraft der ersten Tellerfeder 21 größer als die entgegengerichtete Federkraft der zweiten Tellerfeder 24, so dass sich eine resultierende Federkraft ergibt, die die gewünschte und beschriebene Spannkraft auf den beweglichen Reibbremsbelag 5 ausübt. Da die erste Tellerfeder 21 bzw. die resultierende Federkraft beider Tellerfedern 21, 24 einen Teil der Spannkraft der Scheibenbremse 1 aufbringen, ist die Betätigungseinrichtung 6 entsprechend entlastet. Je nach Auslegung kann die resultierende Federkraft beider Tellerfedern 21, 24 einen großen Teil der Spannkraft der Scheibenbremse 1 ausmachen. In der Parkbremsstellung der Scheibenbremse 1, in der sich die Kugeln 13 des Rampenmechanismus 10 in den Vertiefungen 18 der Rampen 15 befinden, ist das Untersetzungsgetriebe 9 lastfrei. Seine Zahnräder und/oder die Verzahnung 32 der Scheibe 11 können deswegen aus Kunststoff bestehen.

Wie bereits gesagt beaufschlagt die Abtriebsscheibe 12 des Rampenmechanismus 10 den beweglichen Reibbremsbelag 5 über das Schraubgetriebe 14. Eine Spindel 25 und eine Mutter 26 des Schraubgetriebes 14 sind hülsenförmig und dünnwandig und weisen dadurch eine Federelastizität auf.

Mit der Spindel 25 steht eine rohrförmige Mutter 26 in Eingriff, an deren Stirnende der Reibbremsbelag 5 angeordnet ist. Das Schraubgetriebe 14 dient zur Verschleißnachstellung bei Verschleiß der Reibbremsbeläge 4, 5. Es wird im Sinne einer Zustellung des Reibbremsbelags 5 zur Bremsscheibe 3 verstellt um einen Verschleiß der Bremsbeläge 4, 5 auszugleichen. Bei dieser Verstellung wird eine freie, aus der Mutter 26 vorstehende Länge der Spindel 25 größer, wodurch ein Federweg aufgrund der Federelastizität der hülsenförmigen und gewellten Spindel 25 zunimmt. Dadurch wird zumindest teilweise ausgeglichen, dass eine Federelastizität der Reibbremsbeläge 4, 5 bei durch Verschleiß abnehmender Dicke kleiner wird.

Die Verstellung des Schraubgetriebes 14 erfolgt, indem mit dem Elektromotor 8 die Antriebsplatte 11 des Rampenmechanismus 10 bei gelöster Scheibenbremse 1 in Löserichtung beaufschlagt wird. Der die Drehwinkelbegrenzung bildende Anschlag 20 der Rampen 15 verhindert eine Verdrehung der beiden Platten 11, 12 des Rampenmechanismus 10 gegeneinander. Die Abtriebsplatte 12 bewegt sich mit der Antriebsplatte 11 mit in Löserichtung, wobei die Spindel 25 in der Mutter 26 des Schraubgetriebes 14 verdreht und das Schraubgetriebe 14 wie beschrieben im Sinne einer Zustellung des Reibbremsbelags 5 zur Bremsscheibe 3 verstellt wird. Dadurch wird der Verschleißausgleich bewerkstelligt.

Die beiden im Gehäuse 22 des Bremssattels 2 und an der Abtriebsscheibe 12 Rampenmechanismus 10 anliegenden Tellerfedern 21, 24 bilden eine Rutschkupplung, die die beschriebene Drehung der Abtriebsplatte 12 des Rampenmechanismus 10 über die gelöste Stellung hinweg in Löserichtung zulassen. In Zuspanndrehrichtung und wenn die beiden Platten 11, 12 des Rampenmechanismus 10 nicht an ihrer Drehwinkelbegrenzung 20 anliegen, halten die beiden Tellerfedern 21, 24, die die Rutschkupplung bilden, die Abtriebsplatte 12 drehfest.

Bei der abgewandelten Ausführungsform gemäß Figur 4 weist die Antriebsplatte 11 des Rampenmechanismus 10 auf ihrer der Abtriebsplatte 12 abgewandten Stirnseite ebenfalls Rampen 27 auf, auf denen Wälzkörper, im Ausführungsbeispiel Kegelrollen 28, wälzen. Auf der der Abtriebsplatte 12 abgewandten Seite der Antriebsplatte 11 ist eine hier als Druckplatte 29 bezeichnete Platte angeordnet, die ebenfalls Rampen 30 aufweist, auf denen die Kegelrollen 28 wälzen. Die Abwandlung gemäß Figur 4 weist also einen zweiten Rampenmechanismus 31 auf. Die Druckplatte 29 ist mit einem Axiallager 33 drehbar und axial fest im Gehäuse 22 des Bremssattels 2 gelagert. Die erste Tellerfeder 21 greift nicht an der Abtriebsplatte 12 sondern an der Druckplatte 29 an.Zur Betätigung der Scheibenbremse 1 wird wie in Figur 1 die Antriebsplatte 11 des ersten Rampenmechanismus 10 mit der elektromechanischen Betätigungseinrichtung 6 mus 10 mit der elektromechanischen Betätigungseinrichtung 6 drehend angetrieben. Dabei bewegt sich die drehbar und axial fest im Gehäuse 22 des Bremssattels 2 gelagerte Antriebsplatte nicht axial, sondern sie bewegt über den zweiten Rampenmechanismus 31 die Druckplatte 29 in axialer Richtung.. Dabei spannt oder löst die Druckplatte 29 abhängig von der Richtung der Steigung des zweiten Rampenmechanismus 31 die an ihr angreifende erste Tellerfeder 21. Über den zweiten Rampenmechanismus 31 bewirkt die erste Tellerfeder 21 ein Moment auf die Antriebsplatte 11, das im Sinne eine Zuspannens der Scheibenbrems 1 wirkt und das Zuspannen der Scheibenbrems 1 wie zu Figur 1 beschrieben unterstützt. Die erste Tellerfeder 21 kann in Figur 4 im steigenden Abschnitt ihrer Federkennlinie benutzt werden. Wird sie wie in Figur 1 im fallenden Abschnitt ihrer Federkennlinie benutzt, ist die Steigung des zweiten Rampenmechanismum 31 umgekehrt, so dass sich die Druckplatte 29 beim Zuspannen der Scheibenbremse 1 axial in Richtung zur Bremsscheibe verschiebt. Auf jeden Fall steigt die Federkraft der ersten Tellerfeder 21 beim Zuspannen der Scheibenbremse 1. Der zweite Rampenmechanismus 31 bildet ein Getriebe, über das die erste Tellerfeder 21 die Antriebsplatte 11 mit einem Moment und mittlelbar über den ersten Rampenmechanismus 10 den Reibbremsbelag 5 beaufschlagt. Mit dem ersten Rampenmechanismus 31 wird eine Über- oder auch Untersetzung eines Federwegs und der Federkraft der ersten Tellerfeder 21 erreicht, so dass eine Anpassung der Federeigenschaften der Tellerfeder 21, die im Abschnitt ihrer fallenden Federkennlinie verwendet wird, an die Gegebenheiten und Erfordernisse der Scheibenbremse 1 möglich ist. Da die Rampen 27, 30 des zweiten Rampenmechanismus 31 eine sich über die Länge der Rampen 27, 30 ändernde Steigung aufweisen können, lässt sich mit dem zweiten Rampenmechanismus 31 ein Getriebe mit sich ändernder Übersetzung verwirklichen. Dadurch sind vielfältige Anpassungsmöglichkeiten der Eigenschaften der ersten Tellerfeder 21 an die Gegebenheiten und Erfordernisse der Scheibenbremse 1 möglich.

## Patentansprüche

1. Elektromechanische Reibungsbremse, mit einer elektromechanischen Betätigungseinrichtung (6), die einen Elektromotor (8) aufweist, und mit einem Reibbremsbelag (5), der zur Betätigung der Reibungsbremse (1) mit der Betätigungseinrichtung (6) gegen einen zu bremsenden Bremskörper (3) drückbar ist, und mit einem Federelement (21), das eine fallende Federkennlinie (23) aufweist und den Reibbremsbelag (5) im Sinne einer Bremsbetätigung beaufschlagt, **dadurch gekennzeichnet, dass** die Betätigungseinrichtung (6) einen Rampenmechanismus (10) aufweist, der eine rotatorische Antriebsbewegung des Elektromotors (8) in eine translatorische Bewegung zum Drücken des Reibbremsbelags (5) gegen den Bremskörper (3) aufweist, und daß das Federelement parallel zur Betätigungseinrichtung (6) wirkt.

2. Reibungsbremse nach Anspruch 1, **dadurch gekennzeichnet, dass** der Rampenmechanismus (10) Wälzkörper (13) aufweist.

3. Reibungsbremse nach Anspruch 1, **dadurch gekennzeichnet, dass** der Rampenmechanismus (10) ausgehend von einer Ausgangsstellung bei gelöster Reibungsbremse (1) zunächst eine große Steigung zur Überwindung eines Lüftspiels zwischen dem Reibbremsbelag (5) und dem dung eines Lüftspiels zwischen dem Reibbremsbelag (5) und dem Bremskörper (3) aufweist.

4. Reibungsbremse nach Anspruch 1, **dadurch gekennzeichnet, dass** der Rampenmechanismus (10) eine bei am Bremskörper (3) anliegendem Reibbremsbelag (5) mit zunehmender Zuspannung der Reibungsbremse (1) abnehmende Steigung aufweist.

5. Reibungsbremse nach Anspruch 1, **dadurch gekennzeichnet, dass** der Rampenmechanismus (10) nach einem Anstieg (17) eine Vertiefung (18) zum Feststellen der Reibungsbremse (1) in einer Parkbremsstellung aufweist.

6. Reibungsbremse nach Anspruch 5, **dadurch gekennzeichnet, dass** der Rampenmechanismus (10) nach der Vertiefung (18) einen weiteren Anstieg (19) aufweist.

7. Reibungsbremse nach Anspruch 1, **dadurch gekennzeichnet, dass** der Rampenmechanismus (10) eine Verzahnung (32) aufweist, an der drehend vom Elektromotor (8) angetrieben wird.

8. Reibungsbremse nach Anspruch 1, **dadurch gekennzeichnet, dass** der Rampenmechanismus (10) eine Drehwinkelbegrenzung in einer Richtung aufweist, die einen Rückdrehwinkel beim Lösen der Reibungsbremse (1) begrenzt, dass die Reibungsbremse (1) eine Kupplung (21, 24) aufweist, die in einer Betätigungsdrehrichtung ein zum Zuspannen der Reibungsbremse (1) ausreichendes Drehmoment überträgt und in einer entgegengesetzten Lösedrehrichtung bei Überwinden eines begrenzten Drehmoments eine Verdrehung zwischen Kupplungsein- und Kupplungsausgang zulässt, und dass die Reibungsbremse (1) ein Schraubgetriebe (14) aufweist, über das die Betätigungseinrichtung (6) den Reibbremsbelag (5) gegen den Bremskörper (3) drückt und das bei einer Verdrehung des Kupplungseingangs gegenüber dem Kupplungsausgang im Sinne einer Zustellung des Reibbremsbelags (5) zum Bremskörper (3) verstellt wird.

9. Reibungsbremse nach Anspruch 8, **dadurch gekennzeichnet, dass** das Schraubgetriebe (14) eine Federelastizität aufweist, die bei einer Verstellung im Sinne einer Zustellung weicher wird.

10. Reibungsbremse nach Anspruch 1, **dadurch gekennzeichnet, dass** die Reibungsbremse (1) ein zweites Federelement (24) mit fallender Federkennlinie aufweist, das dem Federelement (21) mit der fallenden Federkennlinie entgegenwirkt.

11. Reibungsbremse nach Anspruch 1, **dadurch gekennzeichnet, dass** mindestens eines der Federelemente (21, 24) an einem Bauteil (12) des Rampenmechanismus (10) angreift, das bei Betätigung der Reibungsbremse (1) translatorisch bewegt wird.

12. Reibungsbremse nach Anspruch 1, **dadurch gekennzeichnet, dass** die Reibungsbremse (1) ein Getriebe (31) aufweist, über das das Federelement (21) mit der negativen Federkennlinie (23) am Reibbremsbelag (5) angreift.

13. Reibungsbremse nach Anspruch 12, **dadurch gekennzeichnet, dass** das Getriebe (31) eine sich ändernde Übersetzung aufweist.

## Claims

1. Electromechanical friction brake, having an electromechanical actuating device (6) which has an electric motor (8), and having a friction brake lining (5) which, in order to actuate the friction brake (1), can be pressed by way of the actuating device (6) against a brake body (3) to be braked, and having a spring element (21) which has a falling spring characteristic curve (23) and loads the friction brake lining (5) in terms of a brake actuation, **characterized in that** the actuating device (6) has a ramp mechanism (10) which converts a rotational drive movement of the electric motor (8) into a translatory movement for pressing the friction brake lining (5) against the brake body (3), and **in that** the spring element acts parallel to the actuating device (6).

2. Friction brake according to Claim 1, **characterized in that** the ramp mechanism (10) has rolling bodies (13).

3. Friction brake according to Claim 1, **characterized in that**, starting from an initial position with a released friction brake (1), the ramp mechanism (10) first of all has a large gradient to overcome an air play between the friction brake lining (5) and the brake body (3).

4. Friction brake according to Claim 1, **characterized in that** the ramp mechanism (10) has a gradient which falls as the application of the friction brake (1) increases, when the friction brake lining (5) bears against the brake body (3).

5. Friction brake according to Claim 1, **characterized in that**, after a rise (17), the ramp mechanism (10) has a depression (18) for fixing the friction brake (1) in a parking-brake position.

6. Friction brake according to Claim 5, **characterized in that** the ramp mechanism (10) has a further rise (19) after the depression (18).

7. Friction brake according to Claim 1, **characterized in that** the ramp mechanism (10) has a toothing system (32), on which it is driven rotationally by the electric motor (8).

8. Friction brake according to Claim 1, **characterized in that** the ramp mechanism (10) has a rotary-angle limiting means in one direction, which rotary-angle limiting means limits a return rotary angle during release of the friction brake (1), **in that** the friction brake (1) has a clutch (21, 24) which, in one actuating rotational direction, transmits a torque which is sufficient for applying the friction brake (1) and, in an opposed releasing direction permits rotation between the clutch inlet and the clutch outlet when a limited torque is overcome, and **in that** the friction brake (1) has a helical gear mechanism (14), via which the actuating device (6) presses the friction brake lining (5) against the brake body (3) and which is adjusted in the case of a rotation of the clutch inlet with respect to the clutch outlet in the direction of an application of the friction brake lining (5) on the brake body (3).

9. Friction brake according to Claim 8, **characterized in that** the helical gear mechanism (14) has a spring elasticity which becomes softer upon an adjustment in the direction of an application.

10. Friction brake according to Claim 1, **characterized in that** the friction brake (1) has a second spring element (24) with a falling spring characteristic curve, which second spring element (24) counteracts the spring element (21) with the falling spring characteristic curve.

11. Friction brake according to Claim 1, **characterized in that** at least one of the spring elements (21, 24) acts on a component (12) of the ramp mechanism (10), which component (12) is moved translatorily upon actuation of the friction brake (1).

12. Friction brake according to Claim 1, **characterized in that** the friction brake (1) has a gear mechanism (31), via which the spring element (21) with the negative spring characteristic curve (23) acts on the friction brake lining (5).

13. Friction brake according to Claim 12, **characterized in that** the gear mechanism (31) has a changing transmission ratio.

## Revendications

1. Frein à friction électromécanique, comprenant un dispositif d'actionnement électromécanique (6) qui présente un moteur électrique (8), et une garniture de frein à friction (5) qui peut être pressée pour l'actionnement du frein à friction (1) avec le dispositif d'actionnement (6) contre un corps de frein (3) à freiner, et comprenant un élément de ressort (21) qui présente une caractéristique de ressort descendante (23) et sollicite la garniture de frein à friction (5) dans le sens d'un actionnement du frein, **caractérisé en ce que** le dispositif d'actionnement (6) présente un mécanisme de rampe (10), qui transforme un mouvement d'entraînement en rotation du moteur électrique (8) en un mouvement de translation pour presser la garniture de frein à friction (5) contre le corps de frein (3), et **en ce que** l'élément de ressort agit parallèlement au dispositif d'actionnement (6).

2. Frein à friction selon la revendication 1, **caractérisé en ce que** le mécanisme de rampe (10) présente des corps de roulement (13).

3. Frein à friction selon la revendication 1, **caractérisé en ce que** le mécanisme de rampe (10) présente, à partir d'une position de départ lorsque le frein à friction (1) est desserré, tout d'abord une pente importante pour surmonter un jeu entre la garniture de frein à friction (5) et le corps de frein (3).

4. Frein à friction selon la revendication 1, **caractérisé en ce que** le mécanisme de rampe (10) présente une pente diminuant avec l'augmentation du serrage du frein à friction (1) lorsque la garniture de frein à friction (5) s'applique contre le corps de frein (3).

5. Frein à friction selon la revendication 1, **caractérisé en ce que** le mécanisme de rampe (10) présente, après une montée (17), un creux (18) pour fixer le frein à friction (1) dans une position de frein de stationnement.

6. Frein à friction selon la revendication 5, **caractérisé en ce que** le mécanisme de rampe (10) présente, après le creux (18), une autre montée (19).

7. Frein à friction selon la revendication 1, **caractérisé en ce que** le mécanisme de rampe (10) présente une denture (32) sur laquelle il est entraîné en rotation par le moteur électrique (8).

8. Frein à friction selon la revendication 1, **caractérisé en ce que** le mécanisme de rampe (10) présente une limitation d'angle de rotation dans un sens, qui limite un angle de rotation de retour lors du desserrage du frein à friction (1), **en ce que** le frein à friction (1) présente un embrayage (21, 24), qui, dans un sens de rotation d'actionnement, transmet un couple suffisant pour serrer le frein à friction (1), et dans un sens de rotation opposé de desserrage, lors du dépassement d'un couple limité, autorise une rotation entre l'entrée et la sortie de l'embrayage, et **en ce que** le frein à friction (1) présente un engrenage à vis (14), par le biais duquel le dispositif d'actionnement (6) presse la garniture de frein à friction (5) contre le corps de frein (3) et qui est déplacé dans le cas d'une rotation de l'entrée d'embrayage par rapport à la sortie d'embrayage dans le sens d'un rapprochement de la garniture de frein à friction (5) du corps de frein (3).

9. Frein à friction selon la revendication 8, **caractérisé en ce que** l'engrenage à vis (14) présente une élasticité de ressort qui est plus faible dans le cas d'un déplacement dans le sens d'un rapprochement.

10. Frein à friction selon la revendication 1, **caractérisé en ce que** le frein à friction (1) présente un deuxième élément de ressort (24) avec une caractéristique de ressort descendante, qui agit à l'encontre de l'élément de ressort (21) ayant la caractéristique de ressort descendante.

11. Frein à friction selon la revendication 1, **caractérisé en ce qu'**au moins l'un des éléments de ressort (21, 24) vient en prise sur un composant (12) du mécanisme de rampe (10) qui est déplacé en translation lors de l'actionnement du frein à friction (1).

12. Frein à friction selon la revendication 1, **caractérisé en ce que** le frein à friction (1) présente un engrenage (31) par le biais duquel l'élément de ressort (21) avec la caractéristique de ressort négative (23) vient en prise avec la garniture de frein à friction (5).

13. Frein à friction selon la revendication 12, **caractérisé en ce que** l'engrenage (31) présente un rapport de multiplication variable.
